# EUROPÄISCHE PATENTSCHRIFT

(11) **EP 3 822 080 B1**
(45) Veröffentlichungstag und Bekanntmachung des Hinweises auf die Patenterteilung: **26.04.2023**
(21) Anmeldenummer: 20203620.8
(22) Anmeldetag: 23.10.2020
(51) Int. Cl.: B41F 5/24, B41F 33/00

(54) **VERFAHREN ZUR ERMITTLUNG VON DRUCKPARAMETERN EINER DRUCKMASCHINE UND TESTSTAND**
METHOD FOR DETERMINING PRINT PARAMETERS OF A PRINTING MACHINE AND TEST BENCH
PROCÉDÉ DE DÉTERMINATION DES PARAMÈTRES D'IMPRESSION D'UNE MACHINE D'IMPRESSION ET BANC D'ESSAI

(30) Priorität: 18.11.2019 EP 19020644
(43) Veröffentlichungstag der Anmeldung: 19.05.2021
(73) Patentinhaber: Bobst Bielefeld GmbH, 33609 Bielefeld (DE)
(72) Erfinder: ROSTALSKI, Fred, 33615 Bielefeld (DE)
(74) Vertreter: Wagner, Sigrid

(56) Entgegenhaltungen:
- EP-A1- 3 251 850
- CH-B1- 698 621
- DE-U1-202007 004 717

## Beschreibung

Die Erfindung betrifft ein Verfahren zur Ermittlung von Druckparametern einer Druckmaschine, insbesondere einer Flexodruckmaschine, sowie einen Teststand dafür.

In Druckmaschinen wird mittels einer Druckform Farbe auf einen Bedruckstoff, beispielsweise Papier oder Kunststoff, aufgetragen. Je nach Art des Druckverfahrens weisen die Druckformen Erhöhungen (Hochdruck) oder Vertiefungen (Tiefdruck) auf, die dazu dienen, die Farbe von der Druckform auf den Bedruckstoff zu übertragen.

Im Flexodruck werden flexible Klischees mit einem Höhenrelief zum Farbauftrag genutzt. Die Klischees sind aus einem Kunststoff, einem Fotopolymer oder Gummi gefertigt und werden auf Basis einer digitalen Druckvorlage für jeden Druckauftrag einzeln hergestellt.

Hierbei ergibt sich das Problem, dass im Herstellungsprozess des Klischees Abweichungen zwischen digitaler Druckvorlage und fertig montiertem Klischee auftreten können, beispielsweise Unregelmäßigkeiten im erhaltenen Höhenrelief. Auch die Druckzylinder, auf die die Klischees montiert werden, weisen Toleranzen hinsichtlich ihrer Abmessungen und ihrer geometrischen Form auf.

Ebenso wie die Druckzylinder weisen die Farbübertragungswalzen der Druckmaschinen, auch als Rasterwalzen bezeichnet, fertigungsbedingte Maß- und Formabweichungen auf. Die Zustellungswerte der Farbübertragungswalzen gehören zu den Einstellparametern der Flexodruckmaschine.

Die Beurteilung der Qualität des erzielbaren Drucks ist daher erst anhand mehrerer Testdrucke in der Flexodruckmaschine möglich. Zudem ist das Druckergebnis von einer Vielzahl von Druckparametern der Flexodruckmaschine abhängig, die für ein optimales Druckergebnis anhand der Testdrucke ermittelt werden müssen.

Die Maschinenlaufzeiten der Flexodruckmaschine sind jedoch verhältnismäßig teuer, sodass die Rüstzeiten der Flexodruckmaschine, in denen kein fertiges Produkt hergestellt werden kann, möglichst kurzgehalten werden sollten.

Ähnliche Probleme können im Tiefdruck auftreten, beispielsweise durch Unregelmäßigkeiten in den Gravuren der Druckformen.

Aus der EP 3 251 850 A1 ist ein Verfahren gemäß dem Oberbegriff des Anspruchs 1 bekannt, insbesondere eine Flexodruckmaschine mit einem Mounter zur Bestimmung von Registerdaten eines Sleeves, sowie ein entsprechendes Verfahren zur Bestimmung und Einstellung der Registerdaten. Hierzu wird vorgeschlagen, dass der Mounter eine Welle umfasst, auf der der Sleeve (302) fixierbar ist, eine Erfassungseinheit zum Abtasten des Oberflachenprofils der Druckform, und eine Recheneinheit, in der das abgetastete Oberflachenprofil der Druckform einem abgespeicherten Sollprofil zugeordnet und in Abhängigkeit von der Zuordnung die Registerdaten mit Bezug auf die Registermarke berechnet werden. Darüberhinaus ist aus der DE202007004717U1 eine Rotationsdruckmaschine mit einer Anzahl van Farbdecks bekannt, von denen wenigstens eines eine Walze und ein Einstellsystem für die Einstellung der Position der Walze relativ zu wenigstens einem anderen Bauteil der Druckmaschine aufweist, wobei das wenigstens eine Farbdeck eine Steuereinheit aufweist, die dazu eingerichtet ist, Daten über die Walze zu empfangen und zu verarbeiten, die die Topographie der Oberfläche dieser spezifischen Walze und/oder eine räumliche Beziehung zwischen einem Druckmuster und einer auf der Walze gebildeten Referenzmarke beschreiben, und die Steuereinheit weiterhin dazu ausgebildet ist, das Einstellsystem in Übereinstimmung mit diesen Einstelldaten anzusteuern, um so die Walze auf eine optimale Position zum Drucken ohne oder zumindest mit vermindertem Ausschuss einzustellen.

Die Aufgabe der Erfindung ist es, ein kostengünstigeres Verfahren bereitzustellen, um optimierte Druckparameter für eine Druckmaschine zu bestimmen, sowie eine Vorrichtung für ein solches Verfahren bereitzustellen.

Die Aufgabe der Erfindung wird gelöst durch ein Verfahren zur Ermittlung von Druckparametern einer Druckmaschine, umfassend folgende Schritte:
a) Bereitstellen einer Druckform und Montieren der Druckform auf einem Druckzylinder,
b) Aufnehmen wenigstens eines hochaufgelösten Bildes der Oberfläche der Druckform mittels einer 3D-Kamera,
c) Ermitteln eines Höhenprofils der Druckform anhand des wenigstens einen hochaufgelösten Bildes,
d) Berechnen eines simulierten Druckbildes anhand des Höhenprofils und eines Ausgangssatzes von Druckparametern, und
e) Ermitteln optimierter Druckparameter durch Variieren der Druckparameter des Ausgangssatzes oder durch Überprüfen und Variieren der Druckparameter des Ausgangssatzes,
wobei in Schritt e) nach Variation der Druckparameter erneut ein simuliertes Druckbild entsprechend Schritt d) berechnet wird.

Eine 3D-Kamera ermöglicht es, nicht nur eine zweidimensionale Darstellung der Oberfläche der Druckform zu erhalten, sondern zusätzlich auch Höhen- bzw. Tiefeninformationen der Oberfläche basierend auf einer Entfernungsmessung zwischen 3D-Kamera und Oberfläche.

Somit können aus dem von der 3D-Kamera aufgenommenen Bild präzise Informationen über das Höhenprofil der auf dem Druckzylinder montierten Druckform ermittelt werden.

Die 3D-Kamera kann Bilder basierend auf Triangulationsverfahren, einer Timeof-Flight-Messung und/oder einem interferometrischen Messverfahren aufnehmen.

Ein Vorteil des erfindungsgemäßen Verfahrens besteht darin, dass das Bild außerhalb der Druckmaschine aufgenommen werden kann. Somit kann das erfindungsgemäße Verfahren als vorgelagerter Schritt vor dem Einsetzen des Druckzylinders in die Druckmaschine durchgeführt und auf diese Weise die Rüstzeit der Druckmaschine reduziert werden.

Aus dem Höhenprofil lassen sich die im späteren Druck erhaltenen Druckergebnisse berechnen bzw. simulieren. In die Berechnung fließen dabei die Druckparameter der Druckmaschine sowie insbesondere die Eigenschaften des Bedruckstoffs beispielsweise Papier oder Kunststoff, ein.

Mit anderen Worten wird ein Probedruck simuliert, der anschließend auf ausreichende Qualität geprüft werden kann. Zudem ist es auf einfache Weise möglich, die Druckparameter in der Simulation zu variieren und somit optimierte Druckparameter zu erhalten.

Dies wird als iterativer Prozess durchgeführt, sodass die Druckparameter mehrfach variiert werden, bis ein zufriedenstellender Satz an Druckparametern erhalten wurde.

Das erfindungsgemäße Verfahren hat zudem den Vorteil, dass zur Überprüfung der erreichbaren Druckqualität keine Druckfarbe und kein Bedruckstoff verbraucht werden.

Die Druckmaschine ist bevorzugt eine Flexodruckmaschine und die Druckform ein Klischee. Durch die Herstellung des Klischees aus einem Kunststoff, einem Fotopolymer oder Gummi können sich leicht Abweichungen im Höhenprofil des Klischees ergeben. Das erfindungsgemäße Verfahren eignet sich daher besonders für die Anwendung im Zusammenhang mit Flexodruckmaschinen.

Um ein vollständiges Bild über die gesamte Länge der Druckform zu erhalten, kann der Druckzylinder mit der auf ihm montierten Druckform während des Schrittes b) gedreht werden. Mit anderen Worten wird die Druckform während des Schrittes b) mittels des Druckzylinders rotiert.

Zusätzlich kann die 3D-Kamera auf einem beweglichen Träger angebracht sein, der eine Verschiebung der 3D-Kamera erlaubt, insbesondere parallel zur Achse, um die die Druckform mittels des Druckzylinders rotiert wird. Somit können die von der 3D-Kamera aufgenommenen hochaufgelösten Bilder sowohl die gesamte Breite als auch die gesamte Länge der Druckform zeigen, sodass das simulierte Druckbild ein vollständiges Abbild des späteren Drucks ist.

Der bewegliche Träger kann auch dazu eingerichtet sein, den Abstand zwischen 3D-Kamera und Druckform einzustellen. Der bewegliche Träger erlaubt entsprechend eine genaue Einstellung des Abstandes zwischen der 3D-Kamera und der zu betrachtenden Oberfläche der Druckform, beispielsweise zur Bildfokussierung.

Insbesondere für sehr große Druckformen, wie sie für sehr große Druckbreiten Einsatz finden, können mehrere 3D-Kameras vorgesehen sein, die über die Breite der Druckform verteilt angeordnet sind. Dadurch können mehrere Bilder der Druckform zeitgleich aufgenommen werden, wodurch sich die benötigte Zeit zur Aufnahme des Bildes der Oberfläche der Druckform verkürzt.

Die Bewegung des Trägers kann über einen oder mehrere Linearantriebe erfolgen, der bzw. die beispielsweise mittels eines Elektromotors betrieben wird bzw. werden.

Das wenigstens eine hochaufgelöste Bild kann die Oberfläche der Druckform mit einer Auflösung von 1 bis 50 µm darstellen, bevorzugt mit einer Auflösung von 1 bis 10 µm. Entscheidend bei der Wahl der Auflösung ist, dass das aufgenommene Bild die Ermittlung des Höhenprofils der Druckform mit ausreichend hoher Genauigkeit erlaubt. Mit anderen Worten müssen die Erhebungen auf der Oberfläche der Druckform ausreichend deutlich dargestellt werden können, um diese voneinander zu unterscheiden.

In einer Variante wird zur Ermittlung des Höhenprofils in Schritt c) das hochaufgelöste Bild in Teilbereiche unterteilt, wobei jeder Teilbereich mehrere Bildpunkte des hoch aufgelösten Bildes umfasst, und für jeden der Teilbereiche ein Histogramm der an den Bildpunkten gemessenen Höhe der Oberfläche der Druckform erstellt wird.

Das Histogramm stellt somit eine Darstellung der innerhalb des Teilbereichs druckbaren Punkte dar. Das Höhenprofil wird im Wesentlichen durch die auf der Druckform vorhandenen Druckpunkte bzw. Vertiefungen bestimmt, deren Höhe bzw. Tiefe sich deutlich von Bereichen der Druckform ohne entsprechende Druckpunkte bzw. Vertiefungen unterscheidet.

Das Histogramm kann dazu benutzt werden, einen zu erwartenden Farbeindruck zu ermitteln, basierend auf dem Verhältnis der Fläche der Erhebungen bzw. Senken auf der Oberfläche des Klischees, die insbesondere durch die Anzahl der Druckpunkte bzw. Vertiefungen vorgegeben wird, relativ zur Fläche, auf der der Bedruckstoff nicht bedruckt wird.

Insbesondere kann vorgesehen sein, dass in Schritt d) aus dem in Schritt c) erstellten Histogramm für alle im Druck vorgesehenen Farben ein zu erwartender Farbeindruck berechnet wird, anhand dem das simulierte Druckbild berechnet wird.

Insbesondere wird der Farbeindruck für den CMYK-Farbraum oder einen erweiterten Farbraum berechnet, also für die Farben, die üblicherweise später in Druckmaschinen verwendet werden.

In einer weiteren Variante fließt in die Berechnung des simulierten Druckbildes die erwartete Tonwertzunahme ein. Die Tonwertzunahme beschreibt den Effekt, dass mittels eines Druckverfahrens aufgebrachte Punkte auf dem Bedruckstoff im Vergleich zu den auf der Druckform vorhandenen Druckpunkten bzw. Vertiefungen in gewissem Maße deformiert sind, beispielsweise durch Verlaufen verbreitert sind. Dadurch erscheint das Druckbild im fertigen Druck dunkler.

Der später angedachte Bedruckstoff ist jedoch üblicherweise bekannt, sodass die Größe der Tonwertzunahme basierend auf den Materialeigenschaften und den verwendeten Farben ebenfalls bekannt ist. Entsprechend kann das simulierte Druckbild anhand dieses bekannten Wertes so angepasst werden, dass der Einfluss der Tonwertzunahme bereits im simulierten Druckbild berücksichtigt wird.

Für noch unbekannte Druckfarben und Bedruckstoffe können Testdrucke mit bekannten Farbverläufen erstellt werden, um die unbekannten Tonwertzunahmekurven zu ermitteln.

Nach der Berechnung des simulierten Druckbildes kann dieses auf einer Anzeige dargestellt werden. Die Anzeige ist insbesondere eine True Color-Anzeige mit einer Farbtiefe von 24 Bit oder einer anderen farbtreuen Bilddarstellung. Dadurch wird insbesondere das Überprüfen der simulierten Druckbilder durch Bedienpersonal ermöglicht, das in der Durchführung des erfindungsgemäßen Verfahrens geschult ist.

Zudem kann nach Variation der Druckparameter das Druckbild erneut auf der Anzeige dargestellt werden, sodass der Einfluss der veränderten Parameter auf das simulierte Druckbild deutlich wird. Dazu können auch ein oder mehrere der zuvor simulierten Druckbilder auf der Anzeige zum Vergleich dargestellt werden.

Das simulierte Druckbild kann zudem auf der Anzeige farbsepariert dargestellt werden. Mit anderen Worten wird das Bild für jede der später im Druck verwendeten Farben einzeln dargestellt, sodass auch Einflüsse erkannt werden können, die lediglich in Zusammenhang mit einer der Farben auftreten. Dadurch können die Druckparameter auch für jede einzelne Farbe optimiert werden.

Ferner kann das simulierte Druckbild in Schritt e) mit einem Referenzdruckbild verglichen werden. Ein derartiges Referenzdruckbild kann beispielsweise der sogenannte PDF-Proof sein, insbesondere der sogenannte Softproof. Das zum PDF-Proof zugehörige PDF-Dokument wird in der Produktion von Drucken als digitale Vorstufe genutzt, anhand der die Druckform hergestellt wird.

Somit wird es über einen Vergleich des simulierten Druckbildes mit dem PDF-Proof auch möglich, Fabrikationsfehler der Druckform zu erkennen. Diese können über die optimierten Druckparameter wenigstens teilweise ausgeglichen werden. Zudem können Informationen über den Herstellungsprozess der Druckform gewonnen werden.

Insbesondere wird das simulierte Druckbild farbsepariert mit dem farbseparierten Referenzdruckbild verglichen. Dadurch können auch Abweichungen der Druckqualität einzelner Farben erkannt und bei der Ermittlung der optimierten Druckparameter berücksichtigt werden.

Um die Genauigkeit des hochaufgelösten Bildes weiter zu verbessern, kann vor Schritt b) die Position der 3D-Kamera anhand eines Referenzzylinders kalibriert werden.

Die Position der 3D-Kamera relativ zur Druckform ist entlang der Bewegungsrichtung des beweglichen Trägers, auf dem die 3D-Kamera montiert sein kann, nicht zwangsläufig konstant. Vielmehr sind geringe Abweichungen, beispielsweise durch Fertigungstoleranzen und/oder Montageungenauigkeiten, zu erwarten, die anhand des genau gefertigten Referenzzylinders im Vorfeld ermittelt und entsprechend bei der Aufnahme des wenigstens einen hochaufgelösten Bildes und der Ermittlung des Höhenprofils berücksichtigt werden können.

Auch wenn das erfindungsgemäße Verfahren im Speziellen in Zusammenhang mit der Ermittlung von Druckparametern einer Flexodruckmaschine beschrieben wurde, eignet sich das Verfahren analog für alle Druckverfahren, die eine Druckform verwenden, insbesondere für Hochdruckverfahren. Anhand der hochaufgelösten Bilder und des ermittelten Höhenprofils können auch in diesem Fall die genauen Abmessungen der Druckformen bestimmt und simulierte Druckbilder berechnet werden, mittels denen optimierte Druckparameter bestimmt werden können. Gleiches gilt auch für alternative Formen des Druckzylinders. So könnte ebenso eine flache Druckform verwendet werden, die auf nicht runden Druckzylindern eingesetzt werden kann.

Die Aufgabe der Erfindung wird des Weiteren gelöst durch einen Teststand zur Ermittlung von Druckparametern einer Druckmaschine, insbesondere einer Flexodruckmaschine, mit einer Lichtquelle, einer 3D-Kamera, einer Auswerteeinheit, einer Anzeige und einer Bedieneinheit, wobei der Teststand dazu eingerichtet ist, das zuvor beschriebene Verfahren durchzuführen.

Der Teststand ist entsprechend gerade kein Bestandteil der Druckmaschine, sodass die optimierten Druckparameter in einem vorbereitenden Schritt des Drucks ermittelt werden können.

Der Teststand kann mit der Klischeemontagevorrichtung kombiniert sein, so dass unmittelbar nach der Montage der Druckform auf den Druckzylinder die Vermessung der Oberfläche der Druckform erfolgen kann.

Die Auswerteeinheit umfasst insbesondere einen Computer, der für die Berechnung des simulierten Druckbildes verwendet wird. Der Computer kann einen Ausgangssatz von Druckparametern von der Druckmaschine empfangen und/oder optimierte Druckparameter an die Druckmaschine übermitteln.

Die Auswerteeinheit kann zudem eine speicherprogrammierbare Steuerung (SPS, Englisch "Programmable Logic Controller"/ PLC) umfassen, die zur Steuerung oder Regelung des Teststands und/oder der Druckmaschine dient.

Die Anzeige und die Bedieneinheit können auch ein einzelnes Bauteil bilden, beispielsweise in Form eines Touchscreens oder Tablets.

Die Anzeige kann auch eine zusätzliche Anzeige sein, insbesondere eine True Color-Anzeige mit einer Farbtiefe von 24 Bit oder einer anderen farbtreuen Bilddarstellung.

Der Teststand kann mittels der 3D-Kamera analog zur Bestimmung der Oberfläche der Druckform auch die genauen Maße und die genaue Form einer Farbübertragungswalze feststellen, die im späteren Druck eingesetzt werden soll, um die Druckform mit Farbe zu versorgen. Auf diese Weise können optimierte Druckparameter in Form von Einstellparametern der Farbübertragungswalze erhalten werden.

Weitere Vorteile und Eigenschaften der Erfindung ergeben sich aus der nachfolgenden Beschreibung beispielhafter Ausführungsformen sowie aus den Zeichnungen. In diesen zeigen:
- Figur 1 einen erfindungsgemäßen Teststand zur Ermittlung von Druckparametern einer Flexodruckmaschine;
- Figur 2 eine schematische Darstellung der Kalibration des Teststands aus Figur 1;
- Figur 3 eine schematische Darstellung eines hochaufgelösten Bildes, wie es mittels des Teststands aus Figur 1 aufgenommen wurde;
- Figur 4 eine schematische Darstellung von Schritten des erfindungsgemäßen Verfahrens zur Berechnung eines zu erwartenden Farbeindrucks;
- Figur 5 eine Anzeige des Teststands aus Figur 1 während des erfindungsgemäßen Verfahrens;
- Figur 6 ein Blockschema des erfindungsgemäßen Verfahrens.

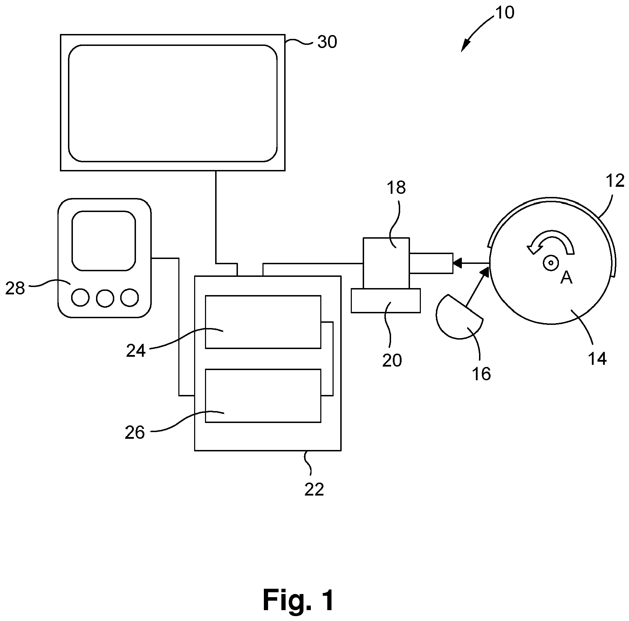

In Figur 1 ist ein erfindungsgemäßer Teststand 10 zur Ermittlung von Druckparametern einer (nicht dargestellten) Druckmaschine gezeigt. Die Druckmaschine ist in der gezeigten Ausführungsform eine Flexodruckmaschine.

Im Teststand 10 soll eine zuvor hergestellte Druckform 12 getestet werden, die in der Flexodruckmaschine für den Druck vorgesehen ist. Entsprechend handelt es sich bei der Druckform 12 in der hier dargestellten Ausführungsform um ein Klischee. Das Klischee wird üblicherweise einzeln für jeden Druckauftrag aus einem Kunststoff, einem Fotopolymer oder Gummi hergestellt. Wenn im Folgenden von dem Klischee die Rede ist, ist entsprechend allgemein auch die Druckform 12 gemeint.

Die Qualität des Druckes ist von der Qualität des jeweiligen Klischees sowie von den verwendeten Druckparametern abhängig. Für ein optimales Druckergebnis müssen daher die Druckparameter an das jeweils hergestellte Klischee angepasst werden.

Das Klischee ist auf einem Druckzylinder 14 montiert, der für den Flexodruck später mitsamt des Klischees in die Flexodruckmaschine eingespannt wird.

Zur Ermittlung optimierter Druckparameter wird der Druckzylinder 14 mittels einer (nicht dargestellten) Halterung am Teststand 10 montiert.

Der Druckzylinder 14 kann um seine Längsachse A rotiert werden, wie in Figur 1 durch einen Pfeil angedeutet. Das auf dem Druckzylinder 14 befestigte Klischee wird entsprechend zusammen mit dem Druckzylinder 14 rotiert.

Der Teststand 10 weist eine Lichtquelle 16 auf, die das Klischee und den Druckzylinder 14 beleuchtet, wie in Figur 1 mit einem Pfeil angedeutet.

Vor dem Druckzylinder 14 ist eine 3D-Kamera 18 angeordnet, die hochaufgelöste Bilder von der Oberfläche des Klischees aufnimmt.

Die Lichtquelle 16 sorgt für eine ausreichende Beleuchtung der Oberfläche des Klischees , damit die 3D-Kamera 18 ausreichend hochaufgelöste Bilder aufnehmen kann.

Die 3D-Kamera 18 ist auf einem beweglichen Träger 20 angebracht, der eine lineare Verschiebung der 3D-Kamera 18 parallel zur Längsachse A erlaubt, also entlang der Breite des Klischees. Der bewegliche Träger 20 kann dazu als Antrieb beispielsweise über einen (nicht dargestellten) Elektromotor verfügen.

Zudem ist die 3D-Kamera 18 ist mit einer Auswerteeinheit 22 verbunden und sendet die aufgenommenen hochaufgelösten Bilder an die Auswerteeinheit 22.

In der in Figur 1 dargestellten Ausführungsform weist die Auswerteeinheit 22 einen Computer 24 sowie eine speicherprogrammierbare Steuerung 26 (SPS, Englisch "Programmable Logic Controller"/ PLC) auf.

Die Auswerteeinheit 22 ist zudem mit einer Bedieneinheit 28 verbunden. Die Bedieneinheit 28 ist beispielsweise ein Tablet oder ein Touchpad und dient zur Ansteuerung des Teststands 10.

Ferner weist der Teststand 10 eine Anzeige 30 auf, die mit der Auswerteeinheit 22 zum Datenaustausch verbunden ist.

Die Anzeige 30 ist eine True-Color-Anzeige mit 24 Bit Farbtiefe und eignet sich daher in besonderer Weise zur farbechten Anzeige von Bildern.

Im Folgenden wird die Funktionsweise des erfindungsgemäßen Teststands 10 im Zusammenhang mit einem erfindungsgemäßen Verfahren zur Ermittlung von Druckparametern der Flexodruckmaschine erläutert.

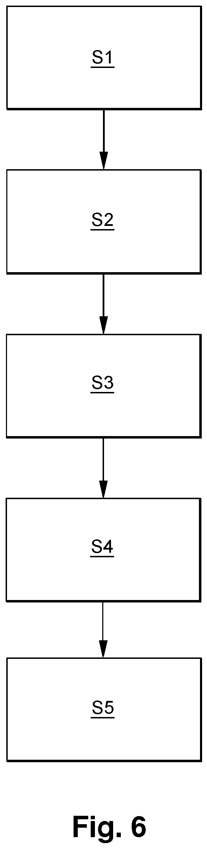

Zunächst wird das Klischee bereitgestellt und auf dem Druckzylinder 14 montiert (Schritt S1 in Figur 6).

Der Druckzylinder 14 wird zuvor oder anschließend in den Teststand 10 montiert.

Der Abstand zwischen der 3D-Kamera 18 und dem Druckzylinder 14 ist durch den Teststand 10 vorgegeben. Dieser Abstand muss möglichst präzise bekannt sein, da der Wert des Abstands für das spätere Ermitteln eines Höhenprofils des Klischees von entscheidender Bedeutung ist.

Abweichungen können vor allem durch technisch bedingte Abweichungen in der linearen Bewegung des beweglichen Trägers 20 entstehen.

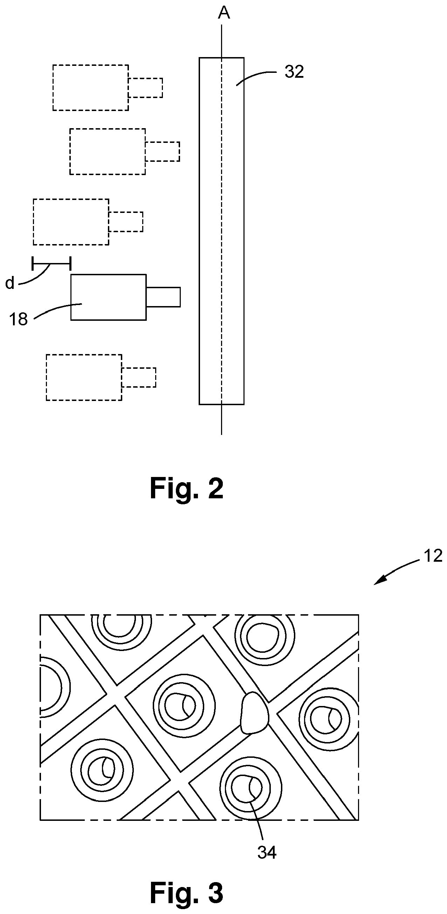

Bei Bedarf und/oder in regelmäßigem Intervallen kann daher die Position der 3D-Kamera 18 kalibriert werden. Dieser Vorgang ist schematisch in Figur 2 dargestellt.

Für die Kalibration wird ein Referenzzylinder 32 mit bekannter Geometrie genutzt, der vor der 3D-Kamera 18 im Teststand 10 montiert wird. Um eine gleichmäßige Oberfläche auf dem Referenzzylinder 32 zu gewährleisten, kann diese in Form geschliffen sein.

Anschließend wird die 3D-Kamera 18 mittels des beweglichen Trägers 20 parallel zur Achse A bewegt und in verschiedenen Positionen entlang der Bewegungsrichtung ein Bild von der 3D-Kamera 18 aufgenommen, anhand denen die Auswerteeinheit 22 die Distanz zum Referenzzylinder 32 für jede der Positionen berechnet.

Etwaige Abweichungen, beispielsweise die in Figur 2 eingezeichnete Distanz d, können in der Auswerteeinheit 22 gespeichert und später bei der Berechnung eines Höhenprofils berücksichtigt werden.

Wieder Bezug nehmend auf Figur 1, werden im erfindungsgemäßen Verfahren in Schritt b) (Schritt S2 in Figur 6) mittels der 3D-Kamera 18 mehrere hochaufgelöste Bilder der Oberfläche des Klischees aufgenommen.

Grundlegend könnte auch lediglich ein einzelnes Bild der Oberfläche des Klischees angefertigt werden und die Druckparameter der Flexodruckmaschine ausschließlich basierend auf diesem Bild ermittelt werden.

Bevorzugt wird jedoch eine Vielzahl von hochaufgelösten Bildern aufgenommen, die mehr als 50 % der Oberfläche des Klischees abbilden, besonders bevorzugt die gesamte Oberfläche des Klischees.

Um Bilder eines größeren Bereichs der Oberfläche des Klischees aufzunehmen, rotiert der Druckzylinder 14 um seine Längsachse A, wodurch auch die gesamte Länge des Klischees das Kamerafeld der 3D-Kamera 18 durchfährt.

Die Rotation kann stufenweise oder stufenlos erfolgen. Entscheidend ist lediglich, dass zu jedem Zeitpunkt die Ausrichtung des Klischees bekannt ist und diese Information mit dem dazu aufgenommenen Bild verknüpft ist.

Zudem kann die 3D-Kamera 18 mittels des beweglichen Trägers 20 parallel zur Längsachse A bewegt werden, wodurch auch die gesamte Breite des Klischees von der 3D-Kamera 18 durchfahren werden kann.

Somit kann ein vollständiges Abbild der Oberfläche des Klischees von der 3D-Kamera 18 aufgenommen werden.

Die Lichtquelle 16 stellt dabei sicher, dass die Oberfläche des Klischees so stark beleuchtet ist, dass ausreichend hochaufgelöste Bilder von der 3D-Kamera 18 aufgenommen werden können.

Die hochaufgelösten Bilder stellen die Oberfläche des Klischees mit einer Auflösung von 1 bis 50 µm dar, bevorzugt mit einer Auflösung von 1 bis 10 µm.

In Figur 3 ist ein beispielhaftes Bild der Oberfläche des Klischees gezeigt. Das Klischee weist eine Vielzahl von Druckpunkten 34 auf, die als Erhöhungen auf der Oberfläche des Klischees ausgebildet sind und im Flexodruck für das Auftragen von Farbe genutzt werden.

Das in Figur 3 dargestellte Bild hat eine Auflösung von 5 µm. Wie zu erkennen ist, reicht diese Auflösung aus, um die Druckpunkte 34 eindeutig voneinander unterscheiden zu können.

Die hochaufgelösten Bilder werden anschließend von der 3D-Kamera 18 an die Auswerteeinheit 22 gesendet, in der gezeigten Ausführungsform an den Computer 24.

Anhand der hochaufgelösten Bilder wird anschließend ein Höhenprofil des Klischees ermittelt (Schritt S3 in Figur 6). In der in Figur 1 dargestellten Ausführungsform erfolgt dies mittels des Computers 24.

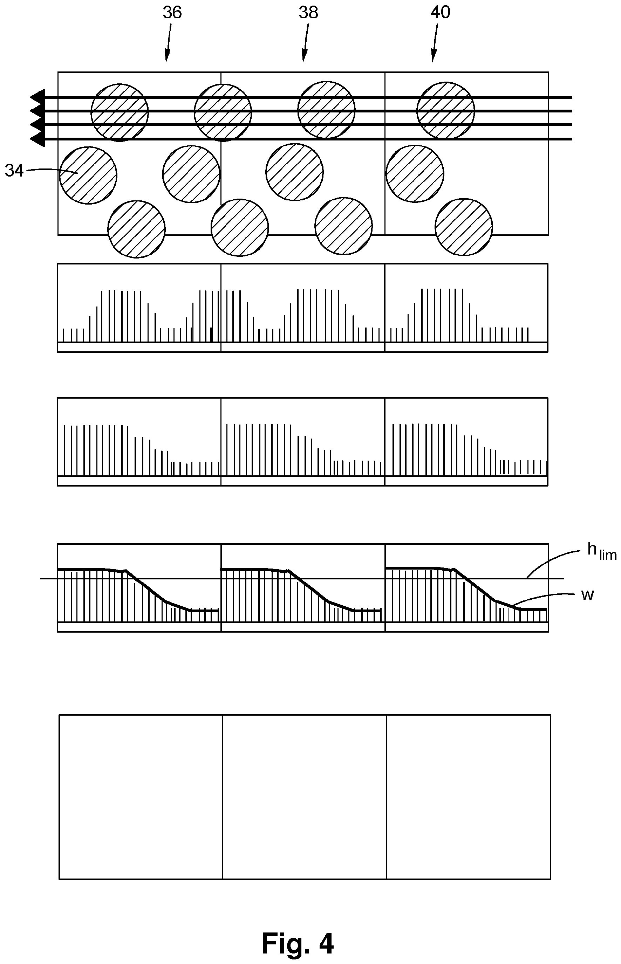

Figur 4 stellt schematisch den Ablauf der Ermittlung des Höhenprofils dar. Zunächst wird das hochaufgelöste Bild in Teilbereiche unterteilt, beispielhaft in Figur 4 in die quadratischen Teilbereiche 36, 38, 40.

Jeder Teilbereich 36, 38, 40 umfasst eine Vielzahl von Bildpunkten des hochaufgelösten Bildes, also mehrere Pixelreihen und Pixelspalten.

Wie in Figur 4 zu erkennen ist, liegen mehrere der Druckpunkte 34 in jedem der Teilbereiche 36, 38, 40.

Für jede der Pixelreihen des hochaufgelösten Bildes, von denen in Figur 4 lediglich vier durch Pfeile verdeutlicht sind, wird für jeden der Teilbereiche 36, 38, 40 ein Histogramm des Höhenprofils erstellt, wie in der zweiten Darstellung von oben in Figur 4 gezeigt.

Das Histogramm jedes der Teilbereiche 36, 38, 40 weist insbesondere eine Digitalisierung auf, die der Anzahl der Pixelspalten des jeweiligen Teilbereiches 36, 38, 40 entspricht.

Die Histogramme jedes der Teilbereiche 36, 38, 40 über alle Pixelreihen hinweg werden anschließend miteinander kombiniert und der Größe nach sortiert. Schließlich wird für jeden der Teilbereiche 36, 38, 40 ein Histogramm erhalten wie in der dritten Darstellung von oben in Figur 4 gezeigt.

Der höchste Wert des Histogramms sowie die Position und Steigung des Abfalls von diesem höchsten Wert stellt eine charakteristische Größe für das Höhenprofil sowie die Anzahl von Druckpunkten 34 in jedem der Teilbereiche 36, 38, 40 dar.

Aus dem so erhaltenen Histogramm kann anhand des Höhenprofils und eines Ausgangssatzes von Druckparametern der Flexodruckmaschine ein simuliertes Druckbild berechnet werden (Schritt S4 in Figur 6).

Dazu wird zunächst aus den zuvor erstellten Histogrammen für die im Druck vorgesehenen Farben ein Farbeindruck berechnet.

Hierfür kann eine zuvor festgelegte Anzahl von Punkten des Histogramms, beispielsweise sechs bis acht Punkte, mit einem Schwellwert hₗᵢₘ verglichen werden, wie in der vierten Darstellung von oben in Figur 4 gezeigt.

Der Schwellwert hₗᵢₘ gibt eine Höhengrenze an, die von der Oberfläche des Klischees überschritten sein muss, um im späteren Druck einen Farbauftrag zu bewirken. Entsprechend weisen alle Bereiche des Bildes, deren Wert im Histogramm unter diesem Schwellwert hₗᵢₘ liegt, nach dem Druck lediglich die Farbe des Bedruckstoffes auf.

Über das Verhältnis der Anzahl der Punkte des Histogramms die in einem der Teilbereiche 36, 38, 40 über und unter dem Schwellwert hₗᵢₘ liegen, kann daher der resultierende Farbeindruck des jeweiligen Teilbereichs 36, 38, 40 berechnet werden, der nach dem Druck mit bekannten Farben und bekanntem Bedruckstoff erzielt wird.

Der Schwellwert hₗᵢₘ ist aus einem Ausgangssatz von Druckparametern bestimmt und kann durch Änderung der Druckparameter verschoben werden.

Für die Ermittlung des Farbeindrucks kann das Histogramm auch über eine Linie w beschrieben werden, die beispielsweise den Werteverlauf des Histogramms angibt, wie in Figur 4 gezeigt. Anhand dieser können weitere farbmetrische Analysen erfolgen.

Schließlich wird für den gesamten jeweiligen Teilbereich 36, 38, 40 angenommen, dass dieser nach dem Druck für einen Betrachter den Farbeindruck der ermittelten Farbe aufweist, wie in der fünften Darstellung von oben in Figur 4 gezeigt.

Auf die gleiche Weise kann der Farbeindruck für alle im späteren Druck vorgesehenen Farben einzeln berechnet werden.

Aus allen berechneten Farbeindrücken für alle Teilbereiche des Bildes kann anschließend ein simuliertes Druckbild berechnet werden.

In der Berechnung des simulierten Druckbildes kann auch die Tonwertzunahme berücksichtigt werden, wobei die Tonwertzunahme ebenfalls für jede der im Druck vorgesehenen Farben einzeln berücksichtigt werden kann.

Anhand des simulierten Druckbildes werden die Druckparameter anschließend variiert oder überprüft und variiert, um optimierte Druckparameter zu erhalten (Schritt S5 in Figur 6).

Das simulierte Druckbild kann beispielsweise auf der Anzeige 30 angezeigt und von Bedienpersonal des Teststands 10 überprüft werden.

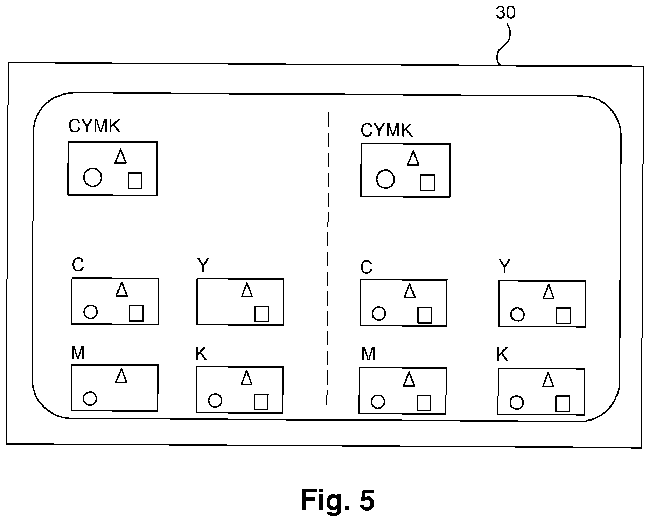

In Figur 5 ist schematisch eine beispielhafte Darstellung auf der Anzeige 30 gezeigt.

Auf der linken Bildschirmhälfte ist das simulierte Druckbild farbsepariert (C, M, Y und K) sowie in einer Kombination aller Farben (CMYK) dargestellt. In Figur 5 werden für insgesamt vier Farben (C - cyan, M - magenta, Y - gelb und K - schwarz) simulierte Druckbilder berechnet.

Das Bedienpersonal kann entsprechend die Qualität des simulierten Druckbildes anhand der Darstellung auf der Anzeige 30 beurteilen.

Zudem ist in der in Figur 5 gezeigten Darstellung auf der rechten Bildschirmhälfte der Anzeige 30 ein Referenzdruckbild angezeigt, mit dem das simulierte Druckbild verglichen wird. Das Referenzdruckbild ist insbesondere ein farbsepariertes PDF-Proof, in diesem Fall ein Softproof. Dadurch sind etwaige Abweichungen identifizierbar, die durch das hergestellte Klischee verursacht werden.

So sind beispielsweise Abweichungen vom Motiv für die Farben Gelb und Magenta auf der linken Bildschirmhälfte der Anzeige 30 zu erkennen.

Über die Bedieneinheit 28 können variierte Druckparameter vorgeschlagen werden.

Beispielsweise können verschiedene Farbzusammensetzungen, verschiedene Bedruckstoffe und/oder Druckeinstellungen der Flexodruckmaschine vorgeschlagen werden.

Werden die Druckparameter variiert, wird nach der zuvor beschriebenen Methode ein neues simuliertes Druckbild berechnet, welches auf der Anzeige 30 dargestellt wird. Es können auch mehrere der zuvor simulierten Druckbilder zum Vergleich auf der Anzeige 30 dargestellt werden.

Somit kann der Einfluss der variierten Druckparameter leicht identifiziert werden. Das erfindungsgemäße Verfahren kann entsprechend auch durch niedriger qualifiziertes Bedienpersonal durchgeführt werden als mit bisherigen Verfahren möglich, da der Einfluss verschiedener Druckparameter getestet und direkt überprüft werden kann, ohne die Rüstzeit der Flexodruckmaschine zu verlängern.

Grundlegend könnte der Teststand auch statt einer separaten Anzeige 30 lediglich eine Anzeige auf dem Bedienelement 28 aufweisen, die zum Überprüfen der simulierten Druckbilder genutzt wird.

Ebenfalls ist es möglich, dass die simulierten Druckbilder nicht durch Bedienpersonal, sondern lediglich von der Auswerteeinheit 22 über einen Vergleich mit dem Referenzbild überprüft werden. Dazu kann die Auswerteeinheit 22 auch über ein Modul zur Bilderkennung verfügen, das bevorzugt ein neuronales Netz zur Bilderkennung nutzt.

Sobald ein optimierter Satz von Druckparametern gefunden wurde, können diese an die Flexodruckmaschine übermittelt oder an dieser eingestellt werden.

Der Druckzylinder 14 mit dem darauf montierten Klischee wird in die Flexodruckmaschine eingesetzt und es kann direkt mit dem Druck begonnen werden. Die Rüstzeit der Flexodruckmaschine wird dadurch erheblich reduziert.

Auch wenn die gezeigte Ausführungsform speziell die Anwendung für ein Klischee für eine Flexodruckmaschine beschrieben wurde, eignet sich das erfindungsgemäße Verfahren für eine Vielzahl alternativer Druckformen und Druckverfahren, beispielsweise für Druckformen einer Tiefdruckmaschine.

## Patentansprüche

1. Verfahren zur Ermittlung von Druckparametern einer Druckmaschine, umfassend folgende Schritte:
a) Bereitstellen einer Druckform (12) und Montieren der Druckform (12) auf einem Druckzylinder (14);
b) Aufnehmen wenigstens eines hochaufgelösten Bildes der Oberfläche der Druckform (12) mittels einer 3D-Kamera (18);
c) Ermitteln eines Höhenprofils der Druckform (12) anhand des wenigstens einen hochaufgelösten Bildes;
d) Berechnen eines simulierten Druckbildes anhand des Höhenprofils und eines Ausgangssatzes von Druckparametern; **gekennzeichnet durch** den folgenden Schritt
e) Ermitteln optimierter Druckparameter durch Variieren der Druckparameter des Ausgangssatzes; oder durch Überprüfen und Variieren der Druckparameter des Ausgangssatzes
wobei in Schritt e) nach Variation der Druckparameter erneut ein simuliertes Druckbild entsprechend Schritt d) berechnet wird.

2. Verfahren nach Anspruch 1, **dadurch gekennzeichnet, dass** die Druckmaschine eine Flexodruckmaschine und die Druckform (12) ein Klischee ist.

3. Verfahren nach Anspruch 1, **dadurch gekennzeichnet, dass** die Druckform (12) während Schritt b) mittels des Druckzylinders (14) rotiert wird.

4. Verfahren nach Anspruch 1 oder 2, **dadurch gekennzeichnet, dass** das hochaufgelöste Bild die Oberfläche der Druckform (12) mit einer Auflösung von 1 bis 50 µm darstellt, bevorzugt mit einer Auflösung von 1 bis 10 µm.

5. Verfahren nach einem der vorhergehenden Ansprüche, **dadurch gekennzeichnet, dass** zur Ermittlung des Höhenprofils in Schritt c) das hochaufgelöste Bild in Teilbereiche (36, 38, 40) unterteilt wird, wobei jeder Teilbereich (36, 38, 40) mehrere Bildpunkte des hochaufgelösten Bildes umfasst, und für jeden der Teilbereiche (36, 38, 40) ein Histogramm der an den Bildpunkten gemessenen Höhe der Oberfläche des Klischees (12) erstellt wird.

6. Verfahren nach Anspruch 5, **dadurch gekennzeichnet, dass** in Schritt d) aus dem in Schritt c) erstellten Histogramm für alle im Druck vorgesehenen Farben ein zu erwartender Farbeindruck berechnet wird, anhand dem das simulierte Druckbild berechnet wird.

7. Verfahren nach einem der vorhergehenden Ansprüche, **dadurch gekennzeichnet, dass** in die Berechnung des simulierten Druckbildes die erwartete Tonwertzunahme einfließt.

8. Verfahren nach einem der vorhergehenden Ansprüche, **dadurch gekennzeichnet, dass** nach der Berechnung des simulierten Druckbilds dieses auf einer Anzeige (30) dargestellt wird.

9. Verfahren nach Anspruch 7, **dadurch gekennzeichnet, dass** das simulierte Druckbild farbsepariert dargestellt wird.

10. Verfahren nach Anspruch 7 oder 8, **dadurch gekennzeichnet, dass** das simulierte Druckbild in Schritt e) mit einem Referenzdruckbild verglichen wird.

11. Verfahren nach einem der vorhergehenden Ansprüche, **dadurch gekennzeichnet, dass** vor Schritt b) die Position der 3D-Kamera (18) anhand eines Referenzzylinders (32) kalibriert wird.

12. Teststand zur Ermittlung von Druckparametern einer Druckmaschine, mit einer Lichtquelle (16), einer 3D-Kamera (18), einer Auswerteeinheit (22), einer Anzeige (30) und einer Bedieneinheit (28), wobei der Teststand (10) dazu eingerichtet ist, das Verfahren nach einem der Ansprüche 1 bis 10 durchzuführen.

## Claims

1. Method for determining print parameters of a printing machine, comprising the following steps:
a) providing a print forme (12) and mounting the print forme (12) on a printing cylinder (14);
b) recording at least one high-resolution image of the surface of the print forme (12) by means of a 3D camera (18);
c) determining a height profile of the print forme (12) from the at least one high-resolution image;
d) calculating a simulated print image using the height profile and an initial set of print parameters; **characterised by** the following step
e) determining optimised print parameters by varying the print parameters of the initial set; or by checking and varying the print parameters of the initial set
wherein in step e), after varying the print parameters, a simulated print image is calculated again according to step d).

2. Method according to claim 1, **characterised in that** the printing machine is a flexographic printing machine and the print forme (12) is a stereotype.

3. Method according to claim 1, **characterised in that** the print forme (12) is rotated during step b) by means of the printing cylinder (14).

4. Method according to claim 1 or 2, **characterised in that** the high-resolution image represents the surface of the print forme (12) with a resolution of 1 to 50 pm, preferably with a resolution of 1 to 10 µm.

5. Method according to any one of the preceding claims, **characterised in that**, in order to determine the height profile in step c), the high-resolution image is divided into sub-regions (36, 38, 40), each sub-region (36, 38, 40) comprising a plurality of pixels of the high-resolution image, and for each of the sub-regions (36, 38, 40) a histogram of the height of the surface of the stereotype (12) measured at the pixels is produced.

6. Method according to claim 5, **characterised in that** in step d) an expected colour impression is calculated from the histogram created in step c) for all colours provided in the print, on the basis of which the simulated print image is calculated.

7. Method according to any one of the preceding claims, **characterised in that** the expected dot gain is included in the calculation of the simulated print image.

8. Method according to any one of the preceding claims, **characterised in that** after the simulated print image has been calculated, it is shown on a display (30).

9. Method according to claim 7, **characterised in that** the simulated print image is displayed in colour-separated form.

10. Method according to claim 7 or 8, **characterised in that** in step e) the simulated print image is compared with a reference print image.

11. Method according to any one of the preceding claims, **characterised in that** before step b) the position of the 3D camera (18) is calibrated using a reference cylinder (32).

12. Test bench for determining print parameters of a printing machine, comprising a light source (16), a 3D camera (18), an evaluation unit (22), a display (30) and an operator control unit (28), wherein the test bench (10) is adapted to carry out the method according to any one of claims 1 to 10.

## Revendications

1. Procédé de détermination de paramètres d'impression d'une machine d'impression, comprenant les étapes suivantes :
a) fournir une plaque d'impression (12) et monter la plaque d'impression (12) sur un cylindre d'impression (14) ;
b) enregistrer au moins une image haute résolution de la surface supérieure de la plaque d'impression (12) au moyen d'une caméra tridimensionnelle, 3D, (18) ;
c) déterminer un profil de hauteur de la plaque d'impression (12) au moyen de la au moins une image haute résolution ;
d) calculer une image d'impression simulée au moyen du profil de hauteur et d'un ensemble initial de paramètres d'impression ; **caractérisé par** l'étape suivante
e) déterminer des paramètres d'impression optimisés en faisant varier les paramètres d'impression de l'ensemble initial ; ou en examinant et en faisant varier les paramètres d'impression de l'ensemble initial
dans lequel à l'étape e), après variation des paramètres d'impression, une image d'impression simulée correspondant à l'étape d) est à nouveau calculée.

2. Procédé selon la revendication 1, dans lequel la machine d'impression est une machine d'impression flexographique, et la plaque d'impression (12) est un cliché.

3. Procédé selon la revendication 1, **caractérisé en ce que** la plaque d'impression (12) est mise en rotation lors de l'étape b) au moyen du cylindre d'impression (14).

4. Procédé selon la revendication 1 ou 2, **caractérisé en ce que** l'image haute résolution représente la surface supérieure de la plaque d'impression (12) avec une résolution de 1 à 50 µm, de préférence avec une résolution de 1 à 10 µm.

5. Procédé selon l'une quelconque des revendications précédentes, **caractérisé en ce que** pour déterminer le profil de hauteur à l'étape c), l'image haute résolution est divisée en zones partielles (36, 38, 40), chaque zone partielle (36, 38, 40) présentant de multiples points d'image de l'image haute résolution, et pour chacune des zones partielles (36, 38, 40), un histogramme de la hauteur mesurée au niveau des points d'image de la surface supérieure du cliché (12) est réalisé.

6. Procédé selon la revendication 5, **caractérisé en ce qu'**à l'étape d), une impression couleur à attendre est calculée à partir de l'histogramme réalisé à l'étape C) pour toutes les couleurs prévues dans l'impression, sur la base de laquelle l'image d'impression simulée est calculée.

7. Procédé selon l'une quelconque des revendications précédentes, **caractérisé en ce que** l'engraissement de point de trame attendu est inclus dans le calcul de l'image d'impression simulée.

8. Procédé selon l'une quelconque des revendications précédentes, **caractérisé en ce qu'**après le calcul de l'image d'impression simulée, celle-ci est affichée sur un dispositif d'affichage (30).

9. Procédé selon la revendication 7, **caractérisé en ce que** l'image d'impression simulée est affichée en des couleurs séparées.

10. Procédé selon la revendication 7 ou 8, **caractérisé en ce que** l'image d'impression simulée est comparée à l'étape e) avec une image d'impression de référence.

11. Procédé selon l'une quelconque des revendications précédentes, **caractérisé en ce qu'**avant l'étape b), la position de la caméra 3D (18) est calibrée au moyen d'un cylindre de référence (32).

12. Banc d'essai pour déterminer les paramètres d'impression d'une machine d'impression, avec une source de lumière (16), une caméra 3D (18), une unité d'évaluation (22), un dispositif d'affichage (30) et une unité de commande (28), dans lequel le banc d'essai (10) est conçu pour mettre en oeuvre le procédé selon l'une quelconque des revendications 1 à 10.
